# EUROPEAN PATENT SPECIFICATION

(11) **EP 2 103 884 B1**
(45) Date of publication and mention of the grant of the patent: **27.04.2011**
(21) Application number: 08005304.4
(22) Date of filing: 20.03.2008
(51) Int. Cl.: F24F 3/06, F24F 11/00, F24D 11/02

(54) **Room heating and method for controlling the room heating**
Raumheizung und Verfahren zur Steuerung der Raumheizung
Chauffage d'une salle et procédé de contrôle du chauffage d'une salle

(43) Date of publication of application: 23.09.2009
(73) Proprietor: DAIKIN INDUSTRIES, LTD., Osaka-shi, Osaka 530-8323 (JP); Daikin Europe N.V., 8400 Oostende (BE)
(72) Inventor: Aspeslagh, Bart, 9800 Deinze (BE); Kataoka, Hidehiko, Kusatsu Shiga, 525-8526 (JP)
(74) Representative: HOFFMANN EITLE

(56) References cited:
- EP-A- 0 157 745
- EP-A- 1 113 233
- GB-A- 2 176 275
- JP-A- 2 082 047
- JP-A- 2007 198 632
- US-A- 2 713 252
- US-A- 4 645 908

## Description

### Field of the invention

The present invention relates to a room heating comprising a heat pump, particularly an air-source heat pump, having an outdoor evaporator, a compressor, a condenser and an expansion means connected by a refrigerant piping in a cycle, a heating medium piping for circulating a heating medium and flowing the heating medium through the condenser exchanging heat between the refrigerant and the heating medium and a heat emitter in the room to be heated and connected to the heating medium piping. In this context, it is to be understood that the room heating of the present invention may also be an installation capable of both room heating and room cooling, wherein, in a cooling mode, the heating medium is used as cooling medium, the outer evaporator serves as outdoor condenser and the condenser serves as the evaporator of the heat pump. The present invention in such an installation is mainly suitable for the heating mode. The present invention also relates to a method for controlling such a heating. A room heating and a method for controlling such a room heating having the features defined in the preamble of claim 1 and 9 is known from US-A-4,645,908. Further, EP-A-0 157 745 discloses a control adapting the flow temperature based on the outdoor temperature, wherein said adapation is triggered by the indoor temperature.

### Background of the invention

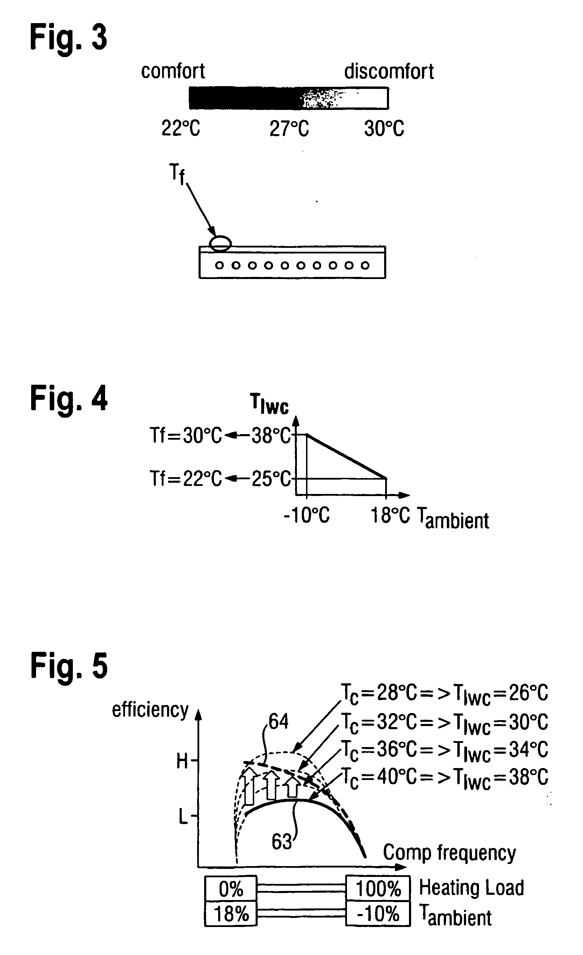

In existing installations the room heating is controlled based on a fixed flow temperature T_{lwc} of the heating medium. In other words, a flow temperature T_{lwc} is initially selected (input), so as to be capable of providing sufficient heat to the heat emitter in order to obtain the desired room temperature in which the heat emitter is arranged. That is, the flow temperature is constant and rather high in all operating conditions. This in turn, and particularly in the intermediate season (spring/autumn) with moderate temperatures leads to e.g. an increased floor temperature T_{f} or an increased surface temperature of a radiator as heat emitter. As depicted in Fig. 3, the floor temperature T_{f} is the temperature of the floor in the room to be heated comprising a floor heating as the heat emitter. Because of the high flow temperature and particularly during the intermediate season, the floor temperature T_{f} resides in the range of 30°C and even above, which is a temperature that is to be said to cause a discomfort (e.g. heavy legs).

The efficiency of the heat pump decreases with an increasing condensing temperature T_{c} of the refrigerant. The condensing temperature T_{c}, i.e. the temperature of the refrigerant at which the refrigerant changes phase from gas to liquid in the condenser, is dependent on the flow temperature. If the flow temperature increases also the condensing temperature T_{c} increases. Therefore, if a high flow temperature is set in the existing systems also the condensing temperature T_{c} is increased. Therefore, the efficiency of the system, particularly in the intermediate seasons, is unnecessarily high.

### Summary of the invention

Therefore, it is the object underlying the present invention to provide a room heating which compared to the existing room heating is improved in regard of comfort and efficiency.

This object according to the present invention is solved by room heating and defined in claim 1 and a method as defined in claim 9.

Embodiments of the present invention are named in the dependent claims.

The general idea underlying the present invention is to control the room heating based on a floating set point, i.e. on a preferably continuously (real time or in time intervals) adapted flow temperature of the heating medium based on the ambient conditions including the outdoor temperature and the room temperature of the room to be heated.

Hence, the room heating of the present invention comprises a heat pump having an evaporator (preferably outdoor), a compressor, a condenser and an expansion means connected by a refrigerant piping in a cycle. Further, the room heating comprises a heating medium piping formed to circulate a heating medium and to flow the heating medium through the condenser exchanging heat between the refrigerant and the heating medium. In the room to be heated, there is provided a heat emitter which preferably comprises floor heating loops. Additionally or alternatively the heat emitter may be a radiator. As previously indicated, the room heating of the present invention may also be an installation capable of both heating and cooling, wherein in a cooling mode, the evaporator functions as condenser and the condenser functions as evaporator. In the cooling mode, the heating medium will be used as cooling medium. The room heating of the present invention is mainly characterized by a control configured to set the flow temperature of the heating medium based on the outdoor temperature and the room temperature of the room to be heated. Accordingly, there may be provided a sensor for measuring the outdoor temperature and a sensor for measuring the room temperature of the room to be heated. The flow temperature in this context may be the temperature of the heating medium flowing into the condenser, i.e. the temperature of the heating medium upstream of the condenser. However, it is preferred that the flow temperature is the temperature of the heating medium leaving the condenser and, hence, downstream of the condenser. Based on the inventive room heating system, the flow temperature is not a predetermined and fixed value as in the prior art but is adapted depending on a changing outdoor temperature and a changing room temperature of the room to be heated. This adaptive control of the flow temperature leads to an improved comfort because of a lower floor temperature T_{f} particularly adapted to the ambient conditions and particularly in the intermediate season, and to an improved efficiency.

The control of the invention is configured to control supply of heating medium to the heat emitter in the room, when the room temperature is lower than a set room temperature and non-supply of heating medium to the heat emitter in the room, when the room temperature is equal to or higher than the set room temperature, wherein the flow temperature of the heating medium is set based on a period of time during which heating medium is supplied to the heater.

Preferably, the control comprises a thermostat controlling supply and non-supply of heating medium to the heater based on the room temperature. Because of the flow temperature of the heating medium being set based on the period of time during which heating medium is supplied and preferably to decrease the flow temperature of the heating medium, when said period of time is equal to or shorter than a predetermined value and to increase the flow temperature of the heating, when the set period of time is equal to or longer than the predetermined value, the lifetime of the thermostat is increased because either a high cycling rate (ON/OFF) or a long ON cycle of the thermostat are prevented.

Further and in a preferred embodiment, the control is configured to decrease the flow temperature of the heating medium with an increasing outdoor temperature and to increase the flow temperature of the heating medium with a decreasing outdoor temperature. This particularly adapts the flow temperature of the heating medium to the amount of heat needed to obtain the desired room temperature in view of the outdoor climate.

Furthermore and particularly in view of comfort, it is preferred that the flow temperature of the heating medium is set at a maximum between 36°C and 40°C, preferably at 38°C and at a minimum between 23°C and 27°C, preferably at 25°C. This at all time provides for a maximum comfort in that the floor temperature T_{f} remains between 30°C and 22°C.

Further and in order to increase the efficiency of the overall system, particularly the heat pump, the compressor is connected to the control via an inverter and the control is configured to adapt the compressor frequency based on the outdoor temperature. It is also possible to adapt the compressor frequency based on the set flow temperature, which in turn is adapted based on the outdoor temperature. In particular it is preferred that the control is configured to decrease the compressor frequency with an increasing outdoor temperature, i.e. decreasing flow temperature, and to increase the compressor frequency with a decreasing outdoor temperature, i.e. with an increasing flow temperature. If the outdoor temperature is low, a higher flow temperature will be set so that a higher heating load is required. Because of the higher flow temperature are higher condensing temperature T_{c} will be required in the heat pump system. Therefore, the compressor frequency is increased. However, if the outdoor temperature increases with a decrease in the flow temperature and resulting in a decreased condensing temperature T_{c}, the heating load is reduced and the compressor frequency is also reduced by the controller to obtain the required condensing temperature T_{c} corresponding to the set flow temperature. Therefore, less energy is necessary to drive the compressor which increases the overall efficiency.

Beside the room heating, the present invention also provides a method for controlling the room heating. The method comprises the step of setting the flow temperature of the heating medium based on the outdoor temperature and the room temperature of the room to be heated. The preferred embodiments of this method are based on the corresponding configurations of the control of the room heating described above so that further explanation is omitted to avoid repetitions.

### Brief description of the drawings

In the following a preferred embodiment of the present invention from which the skilled person may derive further advantages and features of the present invention is explained with reference to the accompanying drawings in which:
Fig. 1 is a perspective view of a room heating and cooling installation in which the present invention may be implemented;
Fig. 2 is a system diagram for schematically explaining the components of the installation shown in Fig. 1;
Fig. 3 discloses a schematic cross-section of a floor heating with the corresponding temperature range of the floor temperature T_{f} being perceived as comfortable or discomfortable;
Fig. 4 is a schematic diagram of adapting the flow temperature T_{lwc} based on the outdoor temperature T_{ambient} with the resulting floor temperature T_{f};
Fig. 5 is a schematic diagram showing the increase of efficiency with respect to an adapted flow temperature Tlwc and an adapted compressor frequency;
Fig. 6 schematically shows a room to be heated together with the installtion as shown in Figs. 1 and 2;
Fig. 7 shows a schematic view of the cycling of a room thermostat with reference to the flow temperature T_{lwc} in a) an non-adaptive mode and b) the adaptive mode of the present invention;
Fig. 8 shows a schematic view of the cycling of a room thermostat with reference to the flow temperature T_{lwc} in a) an non-adaptive mode and b) the adaptive mode of the present invention.

### Embodiment of the invention

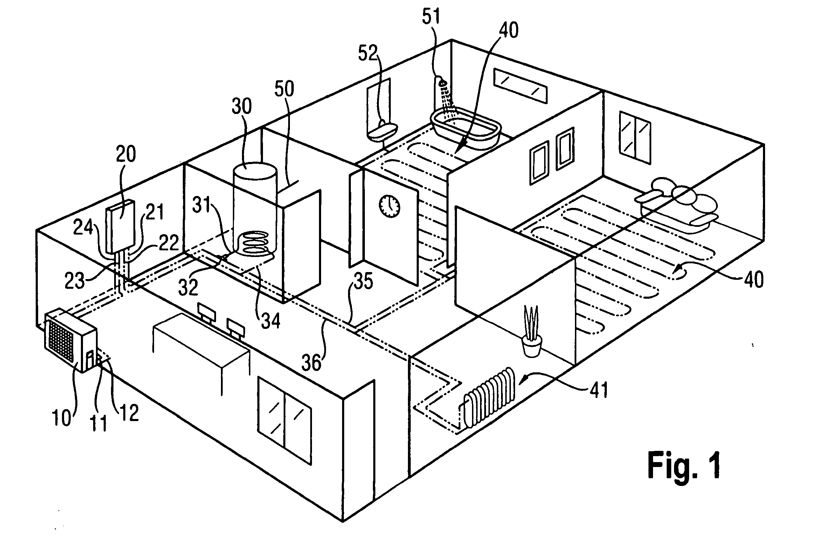

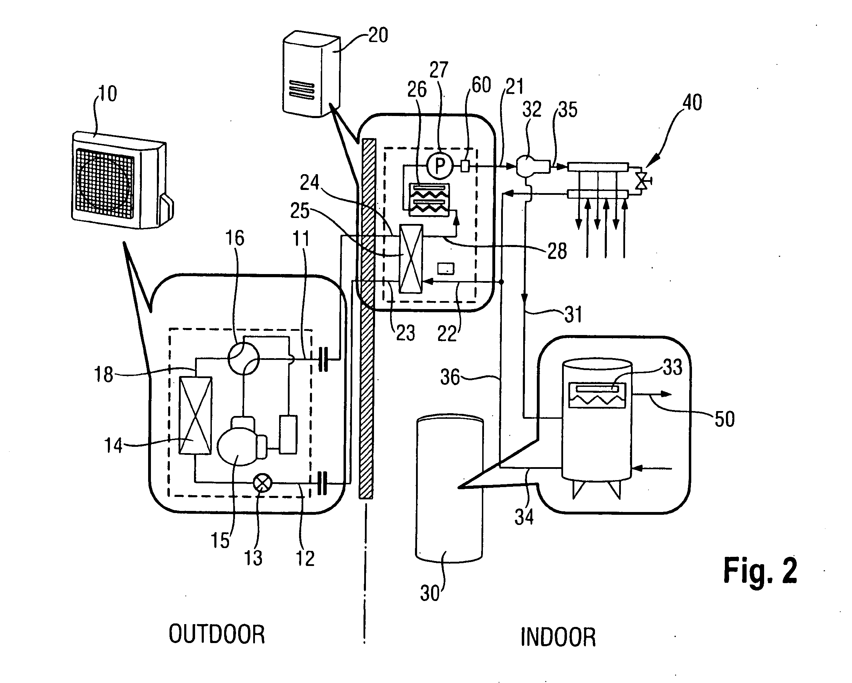

The present application will be described in the following as being implemented in an installation which is capable of heating and cooling a predetermined space (room) and heating water in a hot water tank, the water via piping 50 being used for sanitary purposes like the tabs 52, the shower 51, etc. Yet it is to be understood that the present invention may also be implemented in other installations than the one shown in Figs. 1 and 2, where appropriate.

The installation shown in Fig. 1 consists of three major components, an outdoor unit 10, an indoor unit 20 and a hot water tank 30. The outdoor unit 10 is connected to a piping 11, 12 which connects the outdoor unit 10 to the indoor unit 20. The outdoor unit 10 comprises an inlet/outlet 12 and an outlet/inlet 11 for a refrigerant piping. The indoor unit 20 comprises an inlet/outlet 24 and an outlet/inlet 23 for the refrigerant piping. In addition, the indoor unit has an outlet 21 and an inlet 22 for the fluid to be circulated in the fluid circuit (depending on the mode the fluid is heating or cooling fluid). The fluid may be water or a brine solution. The piping downstream of the outlet 21 is connected via a valve 32 to a piping 31 and a piping 35. The piping 31 passes through the interior of the hot water tank 30 in form of a coil (see Fig. 1) and leaves the hot water tank 30 via a piping 34 connected to a piping 36 leading to the inlet 22. The piping 35 downstream of the valve 32 leads to a heat emitter 41 and/or underfloor heating loops 40 and then is refed to the indoor unit via the piping 36 and the inlet 22.

As will be appreciated, the connections 11, 12 to the outdoor unit 10 and the connections 23, 24 to the indoor unit may respectively be reversed depending on the mode in which the system is operated, i.e. the heating mode or the cooling mode.

As shown in Fig. 2 the outdoor unit comprises an evaporator and/or condenser 14, a four-way valve 16, a compressor 15 and an expansion device 13, which is may be an electric valve or a capillary. The indoor unit 20 inter alia comprises a condenser/evaporator 25. These components form a heat pump. Hence, the evaporator/condenser 14, the compressor 15, the condenser/evaporator 25 and the expansion means 13 are connected in this order in a cycle or loop by means of a refrigerant piping 17, 18. A refrigerant is circulated by means of the compressor 15 in the refrigerant piping 17, 18. In the heating mode the refrigerant circulates clockwise in Fig. 2. Hence, the refrigerant leaving the condenser 25 and having a first temperature T₁ upstream of the expansion means 13 passes the expansion means 13, the pressure being reduced. Afterwards, the refrigerant passes the evaporator 14 and is evaporated having a second temperature T₂ downstream of the evaporator higher than the first temperature. After leaving the evaporator 14, the refrigerant passes through the compressor, the pressure being increased. Finally, the refrigerant is again condensed to the first temperature T₁ in the condenser 25, wherein the heat from the refrigerant is transferred to the water or brine solution (fluid) in the piping connected to the indoor unit via the connections (inlet 22 and outlet 21.

In the cooling mode, this process is reversed, wherein the component 14 then serves as condenser and the component 25 as evaporator. The refrigerant then circulates counter-clockwise in Fig. 2.

The indoor unit 20 further comprises a pump 27 and a backup heater 26. The pump serves for circulating the fluid (heating or cooling fluid) in the fluid circuit (21, 31, 34, 35, 36, 22). The purpose of the backup heater 26 is to cope with situations in which the heat pump described above is not capable to satisfy the entire heating demand (at very low temperatures, e.g. below -10°C). This backup heater 26 in some cases may also be omitted.

In the heating mode the fluid (heating fluid) enters the indoor unit 20 through the inlet 22, passes the condenser 25, wherein heat is transferred from the refrigerant to the fluid, then flows through the backup heater 26 in which the fluid may be additionally heated if necessary and subsequently passes the pump 27 which circulates the fluid in the fluid circuit. Afterwards and by controlling the valve 32 the fluid is either supplied to the floor heating loops 40 and the heat emitter 41 (see Fig. 1) or alternatively to the hot water tank piping (31, 34). In the latter case, the fluid may enter the hot water tank 30 by means of the piping 31 passing the heating coil inside the hot water tank 30 thereby transferring the heat from the fluid to the water contained in the hot water tank 30 and subsequently being refed to the circuit by the pipings 34 and 36 finally being reintroduced into the indoor unit via the inlet 22. Similar, the fluid may also be supplied to the floor heating loops 40 as a heat emitter or the radiator 41 shown in Fig. 1 and subsequently be reintroduced in to the indoor unit via the inlet 22. In case the temperature of the fluid is not sufficient to heat the hot water in the hot water tank an additional (booster) heater 33 may be provided in the hot water tank.

As previously mentioned, the circulation of the fluid in the cooling mode is the same but the cycle of the heat pump (flow direction of the refrigerant) is reversed.

Furthermore, a temperature sensor 28 for measuring the temperature of the heating medium leaving the condenser 25 which in the following is referred to as T_{lwc} is provided. However, it is to be understood that the flow temperature of the heating medium may also be measured upstream of the condenser 25.

In the following, the control of the room heating installation explained with reference to Figs. 1 and 2 is discussed in more detail referring to Fig. 3 to 8.

In particular, if the outdoor temperature T_{ambient} is e.g. 18°C the flow temperature T_{lwc} will be set by the control to e.g. 25°C, which in turn leads to a floor temperature T_{f} of 25°C. If the outdoor temperature T_{ambient} decreases the set flow temperature T_{lwc} will be linearly decreased and in the example will be set to 38°C corresponding to an outdoor temperature of -10°C. This flow temperature leads to a floor temperature of 30°C. The range between -10°C to 18°C is said to cover most of the days during the year in an average European country and an average year. Therefore, the room heating of the present invention is capable of providing a floor temperature in a range between 22°C and 30°C, wherein the flow temperature is closely related to the outdoor temperature and in most cases of the year will result in the floor temperature between 22°C and 30°c which is perceived as a comfortable floor temperature.

The efficiency of the room heating in the heating mode is calculated based on a coefficient of performance (COP) = Te/Te-Tc, wherein Te is the evaporating temperature and T_{c} is the condensing temperature both in Kelvin. That is, if the condensing temperature is reduced the efficiency of the heat pump system increases. The condensing temperature, however, is closely related to the flow temperature T_{lwc} and increases with an increasing flow temperature and decreases with a decreasing flow temperature. Hence and because of the adapted flow temperature of the present invention, the condensing temperature T_{c} is also adapted based on the outdoor temperature. In addition, the efficiency depends on the difference between the temperature indoor (flow temperature) and the outdoor temperature. I.e. at low outdoor temperature of below -5°C, the efficiency rapidly drops.

As previously indicated, the compressor of the heat pump of the present invention preferably is inverter controlled so that the compressor frequency may be adapted to the required heating load and/or the outdoor temperature, respectively.

In Fig. 5 there is shown a schematic diagram showing the efficiency of the system relative to the compressor frequency or the outdoor temperature.

Considering the existing installations with a predetermined set flow temperature T_{lwc} of 38°C resulting in a condensing temperature of 40°C the efficiency of the installation may not exceed a certain low limit L.

However, because of the adapted flow temperature of the present invention together with the inverter controlled compressor (adapted compressor frequency) a higher limit H in regard of the efficiency may be achieved and the overall efficiency of the installation is, therefore, increased.

In particular, in the existing system having a fixed flow temperature of 38°C and a resulting condensing temperature Tc of 40°C the efficiency of the installation may reach a limit L at intermediate outdoor temperatures but a very low efficiency at high temperatures of about 18°C and above and very low temperatures at about 10°C and lower. This is visualized by the curve 63 in Fig. 5.

In the present invention, however, the flow temperature is adapted to the outdoor temperature in that the lower the outdoor temperature becomes the higher becomes the flow temperature and vice versa. In order to obtain a lower flow temperature, a lower condensing temperature T_{c} is required. In other words, if because of higher outdoor temperatures a lower heating load is required, the condensing temperature T_{c} is reduced accordingly, leading to an increased efficiency in higher temperature ranges as depicted by the curve 64 in Fig.5. Hence, the drop of efficiency in higher temperature ranges as in the existing installations may be prevented by the present invention. A higher efficiency limit H may be obtained.

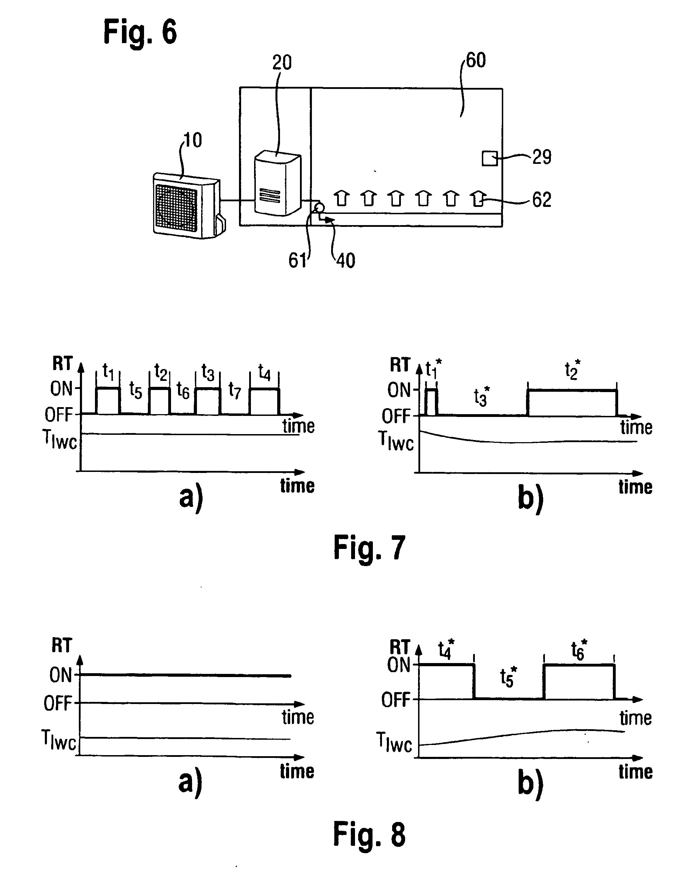

In addition, Fig. 6 shows the installation of Figs. 1 and 2 in a schematic view and showing a room 60 to be heated. The heating medium piping is connected to the floor heating loops 40 in the room 60 via a valve 61. The floor heating loops 40 serve as a heat emitter to emit heat 26 for heating the room. The valve 61 is formed to communicate with a room thermostat RT 29, wherein a desired room temperature may be input (set) in the room thermostat 29 by a user. Based on the result of a comparison between the desired room temperature and the actual room temperature, the room thermostat 29 controls a valve 61 to either supply heating medium to the floor heating loops 40 or close a valve 61 in order not to supply any further heating medium to the floor heating loops 40.

Figs. 7 and 8 compare an installation in which the flow temperature is not adapted based on the room temperature (Figs. 7a and 8a) and an installation according to the present invention in which the flow temperature Tlwc is adapted based on the room temperature.

In Fig. 7a) the room thermostat 29 has a very high cycling rate between an ON-Cycle and an OFF-Cycle over a predetermined period of time. In particular considering Fig. 7a) there are four short ON-cycles t₁ to t₄ with three short OFF-Cycles t₅ to t₇ inbetween, wherein the flow temperature T_{lwc} over the entire period of time remains constant.

The present invention, however, suggests adapting the flow temperature T_{1wc} based on the room temperature and in the present invention based on the period of time during which heating medium is supplied to the heat emitter, i.e. in which the room thermostat 29 (RT) is in the ON-Cycle. In other words, the present invention suggests a control which is configured to compare the time t_{1*} of the on cycle with a predetermined time tₚ. If t_{l*} < tₚ the flow temperature T_{1wc} is decreased as shown in Fig. 7b). This results in a longer period of time t_{3*} of an OFF-Cycle and to a longer period of time t_{2*} in an ON-Cycle.

Fig. 8 shows in Fig. 8a) a room heating which does not adapt the flow temperature with respect to the room temperature of the room to be heated. In this case, the flow temperature T_{1wc} is too low to obtain the desired room temperature in the room 60. Hence, the room thermostat 29 remains continuously in the ON-Cycle controlling the valve 61 to supply heating medium to the floor heating loops 40. According to the present invention shown in Fig. 8b), if the time period t_{4*} > tₚ, the flow temperature T_{1wc} is increased so that an OFF-Cycle t_{5*} follows then again followed by an ON-Cycle t_{6*}. An example of the predetermined time tₚ resides in the range of 600 to 1800 seconds and preferably between 900 to 1500, preferably of 1200 seconds.

This adaption of the flow temperature T_{1wc} based on the desired room temperature and in this embodiment based on the cycling rate of the thermostat 29 not only leads to an increase of the lifetime of the thermostat because a very high cycling rate and a very low (no cycling rate) are prevented but also to a more constant and stable room temperature in the room 60, which is perceived more comfortable. Furthermore, this adaption of the flow temperature, as explained with respect to Figs. 4 and 5, result in an increased efficiency of the overall installation, because of the lower condensing temperature T_{c} necessary and obtained by a lower compressor frequency.

In case more than one room is to be heated by the room heating of the present invention as for example shown in Fig. 1 of the present invention, the adaption of the flow temperature based on the room temperature may be based on an average of the aforesaid calculation with respect to Figs. 7 and 8. Hence, the system compares the cycling rate of the thermostat in all of the rooms to be heated and based on each cycle adapts the flow temperature so as to obtain the most appropriate result for all rooms. In this context, it is rather preferred to have a higher cycling rate rather than no cycling rate as in Fig. 8a so that priority is set to obtain the desired room temperature rather than to prevent a too high cycling rate.

Furthermore and as also shown in Fig. 1, the present invention is not limited to floor heating loops 40 but may also be applied to rooms heated by a conventional radiator 41 as heat emitter. In addition, it is to be understood that also a control configured to set the flow temperature of the heating medium based on only the outdoor temperature rather than the outdoor temperature and the room temperature already leads to an increase in efficiency compared to existing systems. In particular, such a control in combination with an inverter controlled compressor may be used separately without the additional adaption of the flow temperature based on the room temperature as explained with respect to Figs. 6 to 8. Moreover, as will be understood, the present invention is not limited to the room heating system explained with respect to Figs. 1 and 2 but may also be adapted in a room heating system without a cooling mode or in other room heating systems comprising a heat pump. In addition and as previously indicated, the flow temperature does not necessarily have to be the temperature leaving the condenser 25 but may also be the temperature entering the condenser. In addition, it is also conceivable to not linearly correspond the flow temperature of the heating medium to the outdoor temperature as shown in Fig. 4. Yet, the linear correlation at present is considered preferred.

Therefore, it will be apparent to the skilled person that the present invention may be modified an adapted in various ways so that it is to be understood that the present invention is not limited to the above-preferred embodiment.

## Claims

1. Room heating comprising:
a heat pump having an evaporator (14), a compressor (15), a condenser (25) and an expansion means connected by a refrigerant piping in a cycle,
a heating medium piping (21, 22) formed to circulate a heating medium and to flow the heating medium through the condenser (25) exchanging heat between the refrigerant and the heating medium; and
a heat emitter (40, 41) in the room to be heated and connected to the heating medium piping; **characterized by**
a control configured to set the flow temperature (T_{1wc}) of the heating medium based on the outdoor temperature (T_{ambient}) and the room temperature of the room (60) to be heated, wherein the control is configured to control the supply of heating medium to the heat emitter (40, 41) in the room when the room temperature is lower than a set room temperature and non-supply of heating medium to the heat emitter in the room when the room temperature is equal to or higher than the set room temperature wherein the flow temperature (T_{1wc}) of the heating medium is set based on the period of time (t_{2*}, t_{4*}) during which heating medium is supplied to the heat emitter.

2. Room heating as set forth in claim 1, wherein the control is configured to decrease the flow temperature (T_{1wc}) of the heating medium when said period of time (t_{1*}, t_{4*}) is equal to or shorter than a predetermined value (tₚ).

3. Room heating as set forth in claim 1 or 2, wherein the control is configured to increase the flow temperature (t_{lwc}) of the heating medium when said period of time (t_{1*}, t_{4*}) is equal to or longer than a predetermined value (tₚ).

4. Room heating as set forth in any one of claims 1 to 3, wherein the control comprises a thermostat (29) controlling supply and non-supply of heating medium to the heat emitter (40, 41) based on the room temperature.

5. Room heating as set forth in any one of the preceding claims, wherein the control is configured to decrease the flow temperature (T_{1wc}) of the heating medium with an increasing outdoor temperature (T_{ambient}) and to increase the flow temperature (T_{1wc}) of the heating medium with a decreasing outdoor temperature (T_{ambient}).

6. Room heating as set forth in any one of the preceding claims, wherein the flow temperature (T_{1wc}) of the heating medium is set at maximum between 36°C and 40°C, preferably at 38°C, and at minimum between 23°C and 27°C, preferably at 25°C.

7. Room heating as set forth in any one of the preceding claims, wherein the compressor is connected to the control via an inverter and the control is configured to adapt the compressor frequency based on the outdoor temperature.

8. Room heating as set forth in claim 7, wherein the control is configured to decrease the compressor frequency with an increasing outdoor temperature (T_{ambient}) and to increase the compressor frequency with a decreasing outdoor temperature (T_{ambient}).

9. Method for controlling a room heating comprising:
a heat pump having an evaporator (14), a compressor (15), a condenser (25) and an expansion means (13) connected by a refrigerant piping in a cycle,
a heating medium piping (20, 21) formed to circulate a heating medium and to flow the heating medium through the condenser (25) exchanging heat between the refrigerant and the heating medium; the method being **characterized by** the step of:
setting the flow temperature (T_{1wc}) of the heating medium based on the outdoor temperature (T_{ambient}) and the room temperature of the room to be heated, wherein heating medium is supplied to a heat emitter (40, 41) in the room when the room temperature is lower than a set room temperature and no heating medium is supplied to the heat emitter in the room when the room temperature is equal to or higher than the set room temperature, wherein the flow temperature (T_{1wc}) of the heating medium leaving the condenser is set based on the period of time during which heating medium is supplied to the heat emitter.

10. Method as set forth in claim 9, wherein the flow temperature (T_{1wc}) of the heating medium is decreased when said period of time (t_{1*}, t_{4*}) is equal to or shorter than a predetermined value (tₚ).

11. Method as set forth in claim 9 or 10, wherein the flow temperature (T_{lwc}) of the heating medium is increased when said period of time (t_{1*}, t_{4*}) is equal to or longer than a predetermined value (tₚ).

12. Method as set forth in any one of claims 9 to 11, wherein the flow temperature (T_{1wc}) of the heating medium is decreased with an increase of the outdoor temperature (T_{ambient}) and increased with a decrease of the outdoor temperature.

13. Method as set forth in any one of claims 9 to 12, wherein the flow temperature (T_{1wc}) of the heating medium is set at maximum between 36°C and 40°C, preferably at 38°C, and at minimum between 23°C and 27°C, preferably at 25°C.

14. Method as set forth in any one of the claims 9 to 13, wherein the compressor frequency of the compressor (15) of the heat pump is controlled based on the outdoor temperature (T_{ambient}).

15. Method as set forth in claim 14, wherein the compressor frequency is decreased with an increase of the outdoor temperature (T_{ambient}) and increased with a decrease of the outdoor temperature (T_{ambient}).

## Patentansprüche

1. Raumheizung, umfassend:
eine Wärmepumpe, aufweisend einen Verdampfer (14), einen Kompressor (15), einen Kondensator (25) und ein Expansionsmittel, verbunden über eine Kühlmittelrohrleitung in einem Kreislauf,
eine Heizmediumsrohrleitung (21, 22), ausgebildet, um ein Heizmedium zirkulieren zu lassen und um das Heizmedium durch einen Kondensator (25) fließen zu lassen, Wärme austauschend zwischen dem Kühlmittel und dem Heizmedium; und
einen Heizstrahler (40, 41) in dem zu heizenden Raum und mit der Heizmediumsrohrleitung verbunden; **gekennzeichnet durch**
eine Regelung, ausgelegt um die Vorlauftemperatur (T_{1wc}) des Heizmediums einzustellen, basierend auf der Außentemperatur (T_{ambient}) und der Raumtemperatur des zu heizenden Raums (60), wobei die Regelung ausgelegt ist, die Zuführung des Heizmediums zu dem Heizstrahler (40, 41) in dem Raum zu regeln, wenn die Raumtemperatur niedriger ist als eine eingestellte Raumtemperatur, und Nicht-Zuführung des Heizmediums zu dem Heizstrahler in dem Raum, wenn die Raumtemperatur gleich oder höher ist als die eingestellte Raumtemperatur, wobei die Vorlauftemperatur (T_{1wc}) des Heizmediums eingestellt ist, basierend auf dem Zeitraum (t_{2*}, t_{4*}), während dem Heizmedium zu dem Heizstrahler zugeführt wird.

2. Raumheizung gemäß Anspruch 1, wobei die Regelung ausgelegt ist, die Vorlauftemperatur (T_{1wc}) des Heizmediums zu vermindern, wenn der Zeitraum (t_{1*}, t_{4*}) gleich oder kürzer als ein festgelegter Wert (tₚ) ist.

3. Raumheizung gemäß Anspruch 1 oder 2, wobei die Regelung ausgelegt ist, die Vorlauftemperatur (T_{1wc}) des Heizmediums zu erhöhen, wenn der Zeitraum (t_{1*}, t_{4*}) gleich oder länger als ein festgelegter Wert (tₚ) ist.

4. Raumheizung gemäß einem der Ansprüche 1 bis 3, wobei die Regelung ein Thermostat (29) umfasst, regelnd die Zuführung oder Nicht-Zuführung von Heizmedium zu dem Heizstrahler (40, 41), basierend auf der Raumtemperatur.

5. Raumheizung gemäß einem der vorstehenden Ansprüche, wobei die Regelung ausgelegt ist, die Vorlauftemperatur (T_{1wc}) des Heizmediums mit einer zunehmenden Außentemperatur (T_{ambient}) zu vermindern und die Vorlauftemperatur (T_{1wc}) des Heizmediums mit einer abnehmenden Außentemperatur (T_{ambient}) zu erhöhen.

6. Raumheizung gemäß einem der vorstehenden Ansprüche, wobei die Vorlauftemperatur (T_{1wc}) des Heizmediums maximal auf zwischen 36°C und 40°C eingestellt ist, vorzugsweise auf 38°C, und minimal auf zwischen 23°C und 27°C, vorzugsweise auf 25°C.

7. Raumheizung gemäß einem der vorstehenden Ansprüche, wobei der Kompressor mit der Regelung über einen Wechselrichter verbunden ist und die Regelung ausgelegt ist, die Kompressorfrequenz basierend auf der Außentemperatur anzupassen.

8. Raumheizung gemäß Anspruch 7, wobei die Regelung ausgelegt ist, die Kompressorfrequenz mit einer zunehmenden Außentemperatur (T_{ambient}) zu vermindern und die Kompressorfrequenz mit einer abnehmenden Außentemperatur (T_{ambient}) zu erhöhen.

9. Verfahren zum Regeln einer Raumheizung, umfassend:
eine Wärmepumpe, aufweisend einen Verdampfer (14), einen Kompressor (15), einen Kondensator (25) und ein Expansionsmittel (13), verbunden über eine Kühlmittelrohrleitung in einem Kreislauf,
eine Heizmediumsrohrleitung (20, 21), ausgebildet, um ein Heizmedium zirkulieren zu lassen und um das Heizmedium durch einen Kondensator (25) fließen zu lassen, Wärme austauschend zwischen dem Kühlmittel und dem Heizmedium; das Verfahren **gekennzeichnet durch** den Schritt:
Einstellen der Vorlauftemperatur (T_{1wc}) des Heizmediums, basierend auf der Außentemperatur (T_{ambient}) und der Raumtemperatur des zu heizenden Raums, wobei Heizmedium zu einem Heizstrahler (40, 41) in dem Raum zugeführt wird, wenn die Raumtemperatur niedriger als eine eingestellte Raumtemperatur ist und kein Heizmedium zu dem Heizstrahler in dem Raum zugeführt wird, wenn die Raumtemperatur gleich oder höher als eine eingestellte Raumtemperatur ist, wobei die Vorlauftemperatur (T_{1wc}) des Heizmediums, den Kondensator verlassend, eingestellt wird, basierend auf dem Zeitraum, während dem Heizmedium zu dem Heizstrahler zugeführt wird.

10. Verfahren gemäß Anspruch 9, wobei die Vorlauftemperatur (T_{1wc}) des Heizmediums vermindert wird, wenn der Zeitraum (t_{1*}, t_{4*}) gleich oder kürzer als ein festgelegter Wert (tₚ) ist.

11. Verfahren gemäß Anspruch 9 oder 10, wobei die Vorlauftemperatur (T_{1wc}) des Heizmediums erhöht wird, wenn der Zeitraum (t_{1*}, t_{4*}) gleich oder länger als ein festgelegter Wert (tₚ) ist.

12. Verfahren gemäß einem der Ansprüche 9 bis 11, wobei die Vorlauftemperatur (T_{1wc}) des Heizmediums vermindert wird mit einer Zunahme der Außentemperatur (T_{ambient}) und erhöht wird mit einer Abnahme der Außentemperatur.

13. Verfahren gemäß einem der Ansprüche 9 bis 12, wobei die Vorlauftemperatur (T_{1wc}) des Heizmediums maximal auf zwischen 36°C und 40°C eingestellt wird, vorzugsweise auf 38°C, und minimal auf zwischen 23°C und 27°C, vorzugsweise auf 25°C.

14. Verfahren gemäß einem der Ansprüche 9 bis 13, wobei die Kompressorfrequenz des Kompressors (15) der Wärmepumpe geregelt wird, basierend auf der Außentemperatur (T_{ambient}).

15. Verfahren gemäß Anspruch 14, wobei die Kompressorfrequenz mit einer Zunahme der Außentemperatur (T_{ambient}) vermindert wird und mit einer Abnahme der Außentemperatur (T_{ambient}) erhöht wird.

## Revendications

1. Chauffage d'une salle comprenant :
une pompe à chaleur ayant un évaporateur (14), un compresseur (15), un condensateur (25) et un moyen d'expansion reliés par une canalisation de liquide de refroidissement dans un cycle,
une canalisation (21, 22) pour milieu chauffant formée pour faire circuler un milieu chauffant et pour faire écouler le milieu chauffant à travers le condensateur (25) en échangeant la chaleur entre le liquide de refroidissement et le milieu chauffant ; et
un émetteur de chaleur (40, 41) dans la salle à chauffer et relié à la canalisation pour milieu chauffant ; **caractérisé par**
une commande configurée pour commander la température d'écoulement (T_{1wc}) du milieu chauffant sur la base de la température extérieure (T_{ambiante}) et de la température ambiante de la salle (60) à chauffer, où la commande est configurée pour commander l'alimentation du milieu chauffant à l'émetteur de chaleur (40, 41) dans la salle lorsque la température ambiante est inférieure à une température ambiante réglée et ne pas alimenter le milieu chauffant à l'émetteur de chaleur dans la salle lorsque la température ambiante est supérieure ou égale à la température ambiante réglée, où la température d'écoulement (T_{1wc}) du milieu chauffant est réglée sur la base de la durée (t_{2*}, t_{4*}) au cours de laquelle le milieu chauffant est alimenté à l'émetteur de chaleur.

2. Chauffage d'une salle selon la revendication 1, dans lequel la commande est configurée pour diminuer la température d'écoulement (T_{1wc}) du milieu chauffant lorsque ladite durée (t_{1*}, t_{4*}) est inférieure ou égale à une valeur prédéterminée (tₚ).

3. Chauffage d'une salle selon la revendication 1 ou 2, dans lequel la commande est configurée pour augmenter la température d'écoulement (T_{1wc}) du milieu chauffant lorsque ladite durée (t_{1*}, t_{4*}) est supérieure ou égale à une valeur prédéterminée (tₚ).

4. Chauffage d'une salle selon l'une quelconque des revendications 1 à 3, dans lequel la commande comprend un thermostat (29) commandant l'alimentation et la non-alimentation du milieu chauffant à l'émetteur de chaleur (40, 41) sur la base de la température ambiante.

5. Chauffage d'une salle selon l'une quelconque des revendications précédentes, dans lequel la commande est configurée pour diminuer la température d'écoulement (T_{1wc}). du milieu chauffant avec une température extérieure (T_{ambient}) croissante et pour augmenter la température d'écoulement (T_{1wc}) du milieu chauffant avec une température extérieure (T_{ambient}) décroissante.

6. Chauffage d'une salle selon l'une quelconque des revendications précédentes, dans lequel la température d'écoulement (T_{1wc}) du milieu chauffant est réglée au maximum entre 36°C et 40°C, de préférence à 38°C, et au minium entre 23°C et 27°C, de préférence à 25°C.

7. Chauffage d'une salle selon l'une quelconque des revendications précédentes, dans lequel le compresseur est relié à la commande à travers un onduleur et la commande est configurée pour adapter la fréquence du compresseur sur la base de la température extérieure.

8. Chauffage d'une salle selon la revendication 7, dans lequel la commande est configurée pour diminuer la fréquence du compresseur avec une température extérieure (T_{ambient}) croissante et pour augmenter la fréquence du compresseur avec une température extérieure (T_{ambient}) décroissante.

9. Procédé pour commander le chauffage d'une salle comprenant :
une pompe à chaleur ayant un évaporateur (14), un compresseur (15), un condensateur (25) et un moyen d'expansion (13) reliés par une canalisation de liquide de refroidissement dans un cycle,
une canalisation (21, 22) pour milieu chauffant formée pour faire circuler un milieu chauffant et pour faire écouler le milieu chauffant à travers le condensateur (25) en échangeant la chaleur entre le liquide de refroidissement et le milieu chauffant ; le procédé étant **caractérisé par** l'étape qui consiste :
à régler la température d'écoulement (T_{1wc}) du milieu chauffant sur la base de la température extérieure (T_{ambient}) et de la température ambiante de la salle à chauffer, où le milieu chauffant est alimenté à l'émetteur de chaleur (40, 41) dans la salle lorsque la température ambiante est inférieure à une température ambiante réglée et aucun milieu chauffant n'est alimenté à l'émetteur de chaleur dans la salle lorsque la température ambiante est supérieure ou égale à la température ambiante réglée, où la température d'écoulement (T_{1wc}) du milieu chauffant quittant le condensateur est réglée sur la base de la durée au cours de laquelle le milieu chauffant est alimenté à l'émetteur de chaleur.

10. Procédé selon la revendication 9, dans lequel la température d'écoulement (T_{1wc}) du milieu chauffant est diminuée lorsque ladite durée (t_{1*}, t_{4*}) est inférieure ou égale à une valeur prédéterminée (tₚ).

11. Procédé selon la revendication 9 ou 10, dans lequel la température d'écoulement (T_{1wc}) du milieu chauffant est augmentée lorsque ladite durée (t_{1*}, t_{4*}) est supérieure ou égale à une valeur prédéterminée (tₚ).

12. Procédé selon l'une quelconque des revendications 9 à 11, dans lequel la température d'écoulement (T_{1wc}) du milieu chauffant est diminuée avec une augmentation de la température extérieure (T_{ambient}) et augmentée avec une diminution de la température extérieure.

13. Procédé selon l'une quelconque des revendications 9 à 12, dans lequel la température d'écoulement (T_{1wc}) du milieu chauffant est réglée au maximum entre 36°C et 40°C, de préférence à 38 °C, et au minium entre 23 °C et 27 °C, de préférence à 25°C.

14. Procédé selon l'une quelconque des revendications 9 à 13, dans lequel la fréquence du compresseur du compresseur (15) de la pompe à chaleur est commandée sur la base de la température extérieure (T_{ambient}).

15. Procédé selon la revendication 14, dans lequel la fréquence du compresseur est diminuée avec une augmentation de la température extérieure (T_{ambient}) et augmentée avec une diminution de la température extérieure (T_{ambient}).
